# FASCICULE DE BREVET EUROPEEN

(11) **EP 1 384 239 B1**
(45) Date de publication et mention de la délivrance du brevet: **20.10.2004**
(21) Numéro de dépôt: 02730380.9
(22) Date de dépôt: 02.05.2002
(51) Int. Cl.: H01G 9/058

(54) **REALISATION DE COLLECTEURS DE COURANT POUR GENERATEURS ELECTROCHIMIQUES EN MILIEU ORGANIQUE**
HERSTELLUNG VON STROMKOLLEKTOREN FÜR ELEKTROCHEMISCHE GENERATOREN IN EINEM ORGANISCHEN MEDIUM
PRODUCTION OF CURRENT COLLECTORS FOR ELECTROCHEMICAL GENERATORS IN AN ORGANIC MEDIUM

(30) Priorité: 04.05.2001 FR 0106000
(43) Date de publication de la demande: 28.01.2004
(73) Titulaire: CNAM-CONSERVATOIRE NATIONAL DES ARTS ET METIERS, 75003 Paris (FR)
(72) Inventeur: TABERBA, Pierre-Louis, F-78490 Montfort-l'Amaury (FR); SIMON, Patrice, F-65370 Anla (FR); SARRAZIN, Christian, F-91370 Verrières Le Buisson (FR); FAUVARQUE, Jean-François, F-75006 Paris (FR)
(74) Mandataire: Texier, Christian
(86) Numéro de dépôt international: PCT/FR2002/001512
(87) Numéro de publication internationale: WO 2002/091407

(56) Documents cités:
- WO-A-99/24995
- PATENT ABSTRACTS OF JAPAN vol. 017, no. 128 (E-1333), 18 mars 1993 (1993-03-18) & JP 04 303562 A (TOYO INK MFG CO LTD), 27 octobre 1992 (1992-10-27)
- PATENT ABSTRACTS OF JAPAN vol. 017, no. 415 (E-1407), 3 août 1993 (1993-08-03) & JP 05 082396 A (ISUZU MOTORS LTD), 2 avril 1993 (1993-04-02)
- PATENT ABSTRACTS OF JAPAN vol. 018, no. 102 (E-1511), 18 février 1994 (1994-02-18) & JP 05 304050 A (ISUZU MOTORS LTD), 16 novembre 1993 (1993-11-16)

## Description

L'invention concerne les générateurs électrochimiques du type comprenant au moins deux électrodes constituées d'un collecteur de courant et d'une couche de matière active, d'un séparateur conducteur ionique et d'un électrolyte constitué d'un solvant et d'un sel.

Parmi de tels générateurs, on connaît les supercondensateurs à double couche électrochimique fonctionnant sur la base de lois électrostatiques, d'ou leur nom de supercondensateurs, utilisés comme piles secondaires.

Dans de tels générateurs, la différence de potentiel aux bornes peut être limitée par la corrosion du collecteur de courant positif, ou bien par l'oxydation et/ou la réduction de l'électrolyte.

On souhaite, dans les générateurs et notamment dans les supercondensateurs, limiter la résistance électrique de l'ensemble collecteur de courant / matière active, et améliorer le comportement vis à vis de la corrosion et de la passivation de l'ensemble collecteur / masse active.

Par exemple, dans le cas où le collecteur est en aluminium, celui-ci est naturellement protégé par une couche de passivation composée d'alumine hydratée Al₂O₃,xH₂O. Mais cette couche de passivation, du fait de ses propriétés isolantes ioniques et électronique, va avoir pour effet d'augmenter la résistance à l'interface aluminium / matière active.

De plus, l'aluminium constituant le collecteur de courant positif peut voir cette couche d'alumine croître et se densifier, au fur et à mesure des cycles électriques auxquels est soumis le générateur (nombre de cycles typiquement supérieurs à 10000 pour ce type de générateur). L'aluminium peut même, dans certains électrolytes, perdre son caractère passif, ce qui conduit alors à sa dissolution accélérée.

Les mêmes problèmes apparaissent avec d'autres matériaux de collecteur, par exemple avec le titane.

Pour diminuer au mieux les problèmes de corrosion et de passivation, on a proposé dans US 4 562 511 de recouvrir le collecteur d'aluminium avec une peinture chargée en particules conductrices. Toutefois cette peinture tend à accroître la résistance.

Dans le brevet US 5 949 637 déposé le 30 mars 1998 et publié le 7 septembre 1999, on décrit une technique de mise en oeuvre de supports collecteurs en aluminium sous forme de feuille, technique qui consiste en un perçage multiple de la feuille, perpendiculairement à celle-ci, afin de réduire la résistance de contact matière active/feuille d'aluminium. Cette technique peut poser des problèmes de stabilité du contact lors de cyclages de longue durée.

Le brevet WO 99 24 995 décrit un condensateur à double couche, comportant un revêtement à base d'un polymère conducteur extrinsèque composé d'une résine mélamine et d'une charge conductrice, situé entre le collecteur de courant et l'électrode.

Dans le brevet US 6 191 935 déposé le 16 octobre 1998 et publié le 20 février 2001, on décrit une technique de mise en oeuvre d'un collecteur de courant en aluminium en faisant pénétrer par compression de poudres de carbone dures, granulaires, afin de percer la couche d'alumine isolante électronique présente sur sa surface. Ici aussi, la stabilité du contact matière active/collecteur lors de cyclages de longue durée risque d'être compromise.

Dans le brevet US 6 094 788 déposé le 19 janvier 1999 et publié le 1^{er} août 2000, on décrit une technique de mise en oeuvre d'un collecteur de courant en tissu de carbone entourant un collecteur d'aluminium. Cependant, cet assemblage nécessite une feuille d'aluminium déjà dépassivée afin de réduire la résistance de contact matière active/collecteur. Rien n'est fait en ce qui concerne la couche d'alumine pré-existante qui peut être relativement épaisse et présente une résistance de contact élevée.

Dans la demande de brevet JP 111 624 470 déposée le 25 novembre 1997 et publiée le 18 juin 1999, on décrit une technique de mise en oeuvre d'un collecteur de courant en feuille d'aluminium, par vaporisation de grains d'alumine à la surface de cette feuille afin d'augmenter la rugosité de surface et conférer une meilleure adhérence de la matière active sur la feuille d'aluminium. Ce procédé vise à diminuer la résistance de contact feuille d'aluminium/matière active, procédé qui, s'il diminue la résistance de contact entre la matière active et le collecteur, ne protège pas suffisamment ce même collecteur d'une dissolution ou d'une passivation ultérieure.

Dans la demande de brevet européen EP 1 032 064 A1 déposée le 10 février 2000 et publiée le 30 août 2000, on décrit une technique de mise en oeuvre d'un collecteur de courant en aluminium pour un générateur électrochimique au lithium. Ce collecteur est recouvert d'une couche protectrice constituée d'au moins un composant choisi parmi les oxalates, et un composé d'au moins un élément choisi parmi le silicium, le chrome et le phosphore. Ce procédé permet d'éviter la corrosion des collecteurs en aluminium lors de l'enduction d'une pâte de matière active contenant de l'eau sur ce même collecteur. Dans cette technique, on vise à améliorer une phase de réalisation des électrodes pour des accumulateurs au lithium, et on obtient quasiment aucun effet sur les caractéristiques en fonctionnement.

On se propose selon l'invention de diminuer la résistance à l'interface matière active/collecteur de courant (habituellement appelée résistance de contact) et d'améliorer simultanément la protection du collecteur de courant contre la dissolution et la passivation.

Ce but est atteint selon l'invention grâce à un procédé de réalisation d'une électrode du type comprenant notamment un collecteur de courant et une matière électrochimiquement active associée au collecteur, procédé comprenant l'étape consistant à disposer une couche de peinture incluant des particules conductrices entre le collecteur et la matière électrochimiquement active, le procédé comportant, après une étape d'application de la peinture, l'étape consistant à réaliser un traitement thermique de la peinture à une température supérieure à l'ambiante, procédé caractérisé en ce que la peinture comprend un époxyde et un polyuréthanne, la proportion d'epoxyde étant comprise entre 20 et 80% en poids, le reste étant composé essentiellement de polyuréthanne.

D'autres caractéristiques, buts et avantages de l'invention apparaîtront à la lecture de la description détaillée qui va suivre, faite en référence aux figures annexées sur lesquelles :
- la figure 1 représente l'évolution de la résistance en fonction du nombre de cycles d'une cellule de supercondensateur réalisée avec des collecteurs de courant sans peinture chargée en particules conductrices.
- la figure 2 représente l'évolution de la résistance en fonction du nombre de cycles d'une cellule de supercondensateur assemblée avec des collecteurs de courant, sans peinture à particules conductrices, tel que décrit dans l'exemple 2.
- la figure 3 représente l'évolution de la résistance en fonction du nombre de cycles d'une cellule de supercondensateur telle que décrite dans l'exemple 3.
- la figure 4 représente l'évolution de la résistance en fonction du nombre de cycles d'une cellule de supercondensateur telle que décrite dans l'exemple 4.
- la figure 5 représente l'évolution de la résistance en fonction du nombre de cycles d'une cellule de supercondensateur assemblée tel que décrit dans l'exemple 5.
- la figure 6 représente l'évolution de la résistance en fonction du nombre de cycles d'une cellule de supercondensateur telle que décrite dans l'exemple 6.
- la figure 7 représente l'évolution de la résistance en fonction du nombre de cycles d'une cellule de supercondensateur telle que décrite dans l'exemple 7.
- la figure 8 représente l'évolution de la résistance en fonction du nombre de cycles d'une cellule de supercondensateur telle que décrite dans l'exemple 8.
- la figure 9 représente l'évolution de la résistance en fonction du nombre de cycle d'une cellule de supercondensateur telle que décrite dans l'exemple 9.

Dans les exemples ci-après, on revêt préférentiellement le collecteur de courant avec une peinture carbonée sur un substrat de type feuille, grille, plaque, tissé ou non tissé, préférentiellement métallique, ici en aluminium.

Avant application de la peinture proposée, le collecteur de courant en feuille, grille, plaque, tissé ou non tissé, ainsi que déployé d'aluminium subit souvent dans ces exemples un traitement de polissage mécanique, suivi ou non, d'un décapage chimique basique puis acide permettant de préparer sa surface en vue d'appliquer le revêtement.

Les traitements chimiques cités consistent tout d'abord en une immersion dans une solution de potasse de concentration entre 1 et 7 M, puis en un rinçage du collecteur à l'eau permutée, et enfin en une immersion dans une solution de concentration entre 10 et 50% en volume (plus particulièrement 25%) d'acide nitrique (HNO₃) et 18g/l de fluorure de potassium (KF), suivie également d'un rinçage à l'eau permutée.

Ces traitements chimiques par solution alcaline de potasse servent à éliminer la couche d'alumine présente à la surface de l'aluminium.

Deux types de peinture sont proposées ici pour le traitement du support préalablement décapé ou non : le premier est une peinture à base de résine époxyde (HIM : DEP 1213) le second une peinture à base de résine polyuréthanne (HIM : DEP 1214). On propose, dans un exemple avantageux, d'adopter ces deux types de résines dans un mélange qui s'avère conférer à l'électrode des propriétés particulièrement intéressantes.

Ces deux peintures sont chargées avec des conducteurs électroniques carbonés (graphites, charbon, ...) et/ou métallique (poudre d'aluminium par exemple) dans des proportions allant de préférence au minimum de 30% à 80% en poids, préférentiellement à 50% en poids. La peinture est appliquée sur le substrat d'aluminium en fine couche par la technique du « Spray », pulvérisation en français, par exemple peinture au pistolet.

Les collecteurs de courant, une fois traités et peints, subissent un traitement thermique à une température de plus de 40°C sous vide dynamique. Bien qu'on obtienne un résultat acceptable à des températures légèrement supérieures à l'ambiante, on constate des résultats nettement supérieurs à partir de 40°C. Ce traitement s'avère réduire notablement la résistance électrique de l'interface collecteur/matière active. Le traitement thermique élimine le solvant, et l'élimination du solvant améliore aussi le comportement électrique de l'interface : elle s'avère stabiliser la valeur de la capacité de l'interface collecteur/matière active au cours des cycles. En outre, on constate, grâce au traitement thermique, une meilleure tenue de l'interface vis à vis de la passivation et de la dissolution.

La température de traitement ne doit cependant pas être trop élevée (inférieure à 200°C) et la durée trop importante afin d'éviter la croissance de la couche d'oxyde de type Al₂O₃, xH₂O.

La résistivité de cette couche conduirait à des résistances internes élevées, ne permettant pas l'obtention de puissances spécifiques élevées dans les composants réalisés avec ces électrodes.

Un traitement à une température qui ne soit pas supérieure à 200°C s'avère aussi permettre d'éviter une détérioration mécanique de la couche de peinture durant le cyclage.

De tels collecteurs sont utilisables de façon classique, pour l'enduction des matières actives préparées séparément. La mise en oeuvre de ces matières actives est notamment décrite dans la demande de brevet français n° 99/05919, déposée le 10 mai 1999. La matière active est ensuite préférentiellement laminée sur les collecteurs de courant ainsi traités. Cette matière active est par exemple constituée par un charbon actif en poudre de grande surface spécifique à laquelle il est ajouté un liant, et le cas échéant, un additif électronique tel qu'il est décrit dans la demande de brevet déjà citée, ou par un tissu de carbone activé ayant une grande surface spécifique.

Les électrodes ainsi réalisées sont alors préférentiellement assemblées pour constituer des faisceaux d'électrodes, lesquels sont introduits dans des boîtiers de dimensions et de formes variables en fonction des capacités recherchées pour les condensateurs. L'électrolyte est typiquement constitué d'un solvant organique ou d'un mélange de solvants organiques, dans lequel un ou plusieurs sels sont dissous. Les sels utilisés peuvent être par exemple choisis dans ta liste suivante : tétra fluoroborate de tétra ethyl ammonium, tétrafluoroborate de lithium, méthyle sulfonate de tétra éthyle ammonium, tri-fluoro sulfonate de tétra éthyl ammonium. Les solvants peuvent être par exemple choisis dans la liste suivante : acétonitrile, carbonate de propylène, carbonate d'éthylène, di-méthyl carbonate, utilisés purs ou en mélange.

Les exemples ci-dessous permettront donc de mieux illustrer la description de la présente invention et de ses avantages.

Dans les exemples ci-dessous, les électrodes réalisées ont une surface géométrique de 4 cm² et sont assemblées en des cellules qui comportent une électrode pour chaque polarité (montage de laboratoire à deux électrodes).

Ce montage permet de déterminer les caractéristiques accessibles en termes de puissance surfacique ou de conductivité du contact matière active/collecteur et de stabilité en cyclage ou en termes de réduction de la dissolution et de la passivation de l'interface aluminium/matière active lors des cycles de charge et de décharge successifs.

La composition de la pâte de matière active utilisée est la même dans tous les exemples ci-dessous, elle est : 95% de PICACTIF charbon actif de la société PICA (surface BET 2300 m²/g) et 5% de liant (PTFE).

L'électrolyte est une solution de tétra fluoroborate de tétra éthyl ammonium une fois molaire dans l'acétronitrile (NEt₄BF₄ 1 M dans ACN).

Le cyclage des cellules de 4 cm² est réalisé à courant constant (80 mA/cm²) entre 0 et 2,3 V.

Dans un premier temps, on décrira deux exemples d'électrodes dans lesquelles le collecteur n'est recouvert d'aucune peinture. Les résultats obtenus constitueront une référence pour illustrer l'intérêt de l'invention qui sera présentée dans les autres exemples d'électrodes, présentés par la suite.

Dans le premier exemple, les électrodes de supercondensateurs ont été réalisées en utilisant un collecteur en aluminium sans aucun traitement. Celui-ci a simplement été lavé et séché. La pâte de matière active a ensuite été enduite sur ce collecteur.

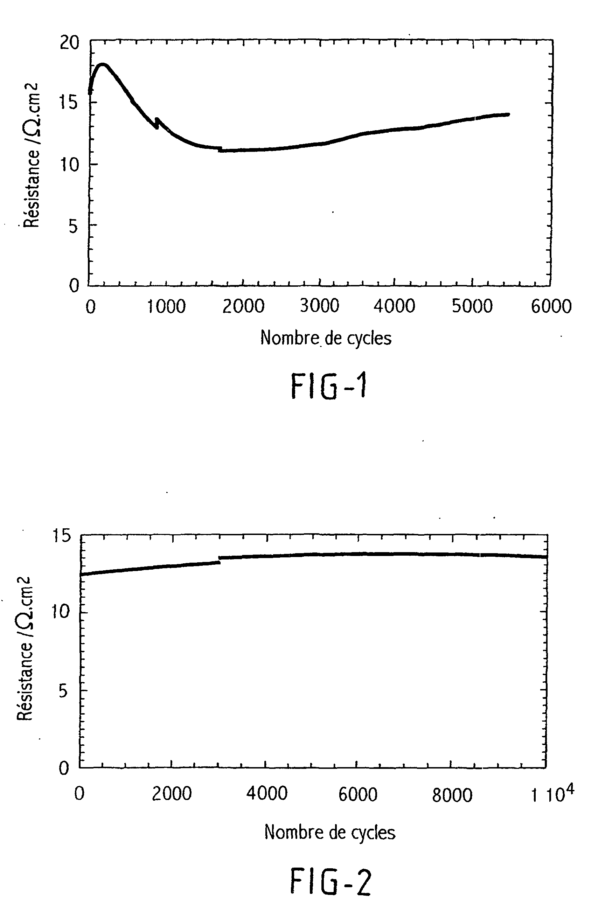

A la figure 1 est représentée l'évolution de la résistance surfacique de la cellule (en ohm.centimètre carré) en fonction du nombre de cycles. Dans ce cas, la résistance augmente rapidement au début, passe par un maximum à 18 ohm.cm² puis diminue ensuite pour enfin croître de façon constante. Ces fluctuations importantes traduisent une instabilité de l'interface matière active/aluminium, liée à des phénomènes de dissolution et de repassivation de l'aluminium. Ce type de collecteur de courant n'est donc absolument pas utilisable dans un système de type supercondensateur à double couche électrochimique.

Les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par immersion dans une solution de potasse de concentration 5 M, suivie d'un rinçage à l'eau permutée, puis par immersion dans une solution de 25% en volume d'acide nitrique (HNO3) et 18 g/l de fluorure de potassium (KF), suivie d'un rinçage à l'eau permutée. Après séchage à l'air, la pâte de matière active a été enduite sur ce collecteur afin de préparer des électrodes de supercondensateur.

A la figure 2 est représentée l'évolution de la résistance surfacique de la cellule (en ohm. centimètre carré) en fonction du nombre de cycles. Dans ce cas, la résistance surfacique de la cellule est de 12 à 14 ohm.cm². Ces valeurs; obtenues de façon reproductible montrent une amélioration d'un facteur deux par rapport aux caractéristiques obtenues avec les électrodes du premier essai ci-dessus. Ces valeurs restent toutefois trop élevées pour permettre d'atteindre des valeurs de puissance spécifique élevées.

Dans un troisième exemple, les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par immersion dans une solution de potasse de concentration 5 M, suivie d'un rinçage à l'eau permutée, puis par immersion dans une solution 25 % en volume d'acide nitrique (HNO₃) et 18 g/l de fluorure de potassium (KF), suivie d'un rinçage à l'eau permutée. Après séchage, le support ainsi traité est peint à l'aide d'une peinture à base de polyuréthanne (HIM DEP 1214 par exemple), chargée à 50% en poids de noir d'acétylène (ACB). Le support ainsi préparé est alors introduit dans une étuve à 100°C, et laissé durant sept jours.

Après ce traitement thermique, la pâte de matière active a été laminée sur ce collecteur afin de préparer de nouvelles électrodes de supercondensateur.

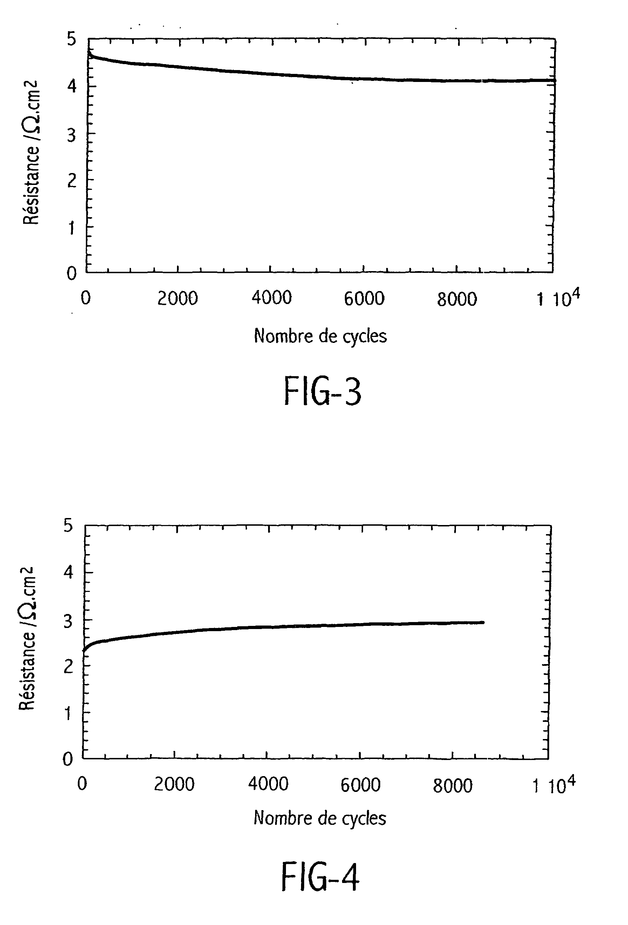

A la figure 3 est représentée l'évolution de la résistance surfacique de la cellule (en ohm.centimètre carré) en fonction du nombre de cycles. Dans ce cas, la résistance surfacique de la cellule se stabilise à une valeur de 4 ohm.cm². Ces valeurs obtenues, également de façon reproductible, montrent une nette amélioration (facteur 3 par rapport aux caractéristiques obtenues dans l'exemple 2). Ce traitement améliore donc le contact matière active/collecteur de courant et protège l'aluminium de la dissolution et de la passivation dans le milieu électrolytique utilisé.

Dans un quatrième exemple, les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par immersion dans une solution de potasse de concentration 5 M, suivie d'un rinçage à l'eau permutée, puis par immersion dans une solution 25% en volume d'acide nitrique (HNO₃) et 18g/l de fluorure de potassium (KF), suivie d'un rinçage à l'eau permutée.

Après séchage, le support ainsi traité est peint à l'aide d'une peinture à base de polyuréthanne (HIM DEP 1214 par exemple), chargée à 50% en poids de noir d'acétylène (ACB). Le support ainsi préparé est alors introduit dans une étuve à 200°C, et laissé durant sept jours.

Comme dans l'exemple précédent, après ce traitement thermique, la pâte de matière active a été laminée sur le collecteur afin de préparer de nouvelles électrodes de supercondensateur.

Sur la figure 4 est représentée l'évolution de la résistance surfacique de la cellule (en ohm.centimètre carré) en fonction du nombre de cycles. Dans ce cas, la résistance surfacique de la cellule se stabilise à une valeur de 3 ohm.cm². Ces valeurs, obtenues de façon reproductible, montrent une légère amélioration par rapport à l'exemple 3.

Dans un cinquième exemple, les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par innmersion dans une solution de potasse de concentration 5 M, suivie d'un rinçage à l'eau permutée, puis par immersion dans une solution 25% en volume d'acide nitrique (HNO3) et 18 g/l de fluorure de potassium (KF), suivie d'un rinçage à l'eau permutée.

Après séchage, le support ainsi traité est peint à l'aide d'une peinture à base d'époxyde (HIM DEP 1213 par exemple), chargée à 50% de noir d'acétylène (ACB). Le support ainsi préparé est alors introduit dans une étuve à 50°C,et laissé durant sept jours.

Comme dans l'exemple précédent, après ce traitement thermique, la pâte de matière active a été laminée sur le collecteur afin de préparer de nouvelles électrodes de supercondensateur.

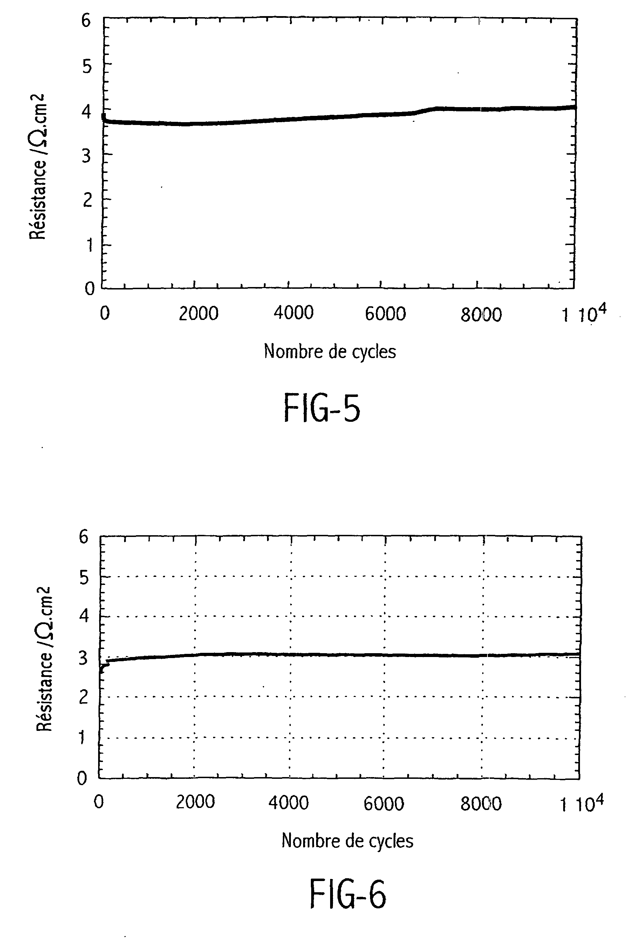

A la figure 5 est représentée l'évolution de la résistance surfacique de la cellule (en ohm.centimètre carré) en fonction du nombre de cycles. Dans ce cas, la résistance surfacique de la cellule tend vers une valeur de 4 ohm.cm2. Cette valeur, obtenue de façon reproductible, montre encore une nette amélioration par rapport à l'exemple 2.

Dans un sixième exemple, les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par immersion dans une solution de potasse de concentration 5 M, suivie d'un rinçage à l'eau permutée, puis par immersion dans une solution 25 % en volume d'acide nitrique (HNO₃) et 18 g/l de fluorure de potassium (KF), suivie d'un rinçage à l'eau permutée.

Après séchage, le support ainsi traité est peint à l'aide d'un mélange contenant 50% en masse de peinture à base d'époxyde (HIM DEP 1213 par exemple) et 50% en masse de peinture à base de polyuréthanne (HIM DEP 1214 par exemple). Ce mélange de peinture est chargé à 50% de noir d'acétylène (ACB). Le support ainsi préparé est alors introduit dans une étuve à 200°C, et laissé durant sept jours.

Comme dans l'exemple précédent, après ce traitement thermique, la pâte de matière active a été laminée sur le collecteur afin de préparer de nouvelles électrodes de supercondensateur.

A la figure 6 est représentée l'évolution de la résistance surfacique de la cellule (en ohm.centimètre carré) en fonction du nombre de cycles. La résistance surfacique de la cellule se stabilise à une valeur de 3 ohm.cm². Ces valeurs obtenues de façon reproductible, montrent encore une nette amélioration par rapport à l'exemple 2, et permet la réalisation de systèmes de puissance.

Le fait d'adopter un mélange de peinture époxyde et polyuréthanne confère à la couche de protection un comportement électrique spécialement avantageux.

En effet, les inventeurs ont pu découvrir que la peinture polyuréthanne permet de conférer à l'interface collecteur/matière active une résistance plus faible qu'une couche d'époxyde.

Les inventeurs ont pu découvrir également qu'une couche d'époxyde présente, elle, l'avantage de conférer un meilleur comportement en termes de stabilité mécanique et physico-chimique au cours des cycles dans le cas de l'époxyde.

De manière avantageuse, il s'avère qu'un mélange d'époxyde et de polyuréthanne confère à la couche à la fois les avantages de l'époxyde et du polyuréthanne, à savoir une faible résistance électrique et une bonne tenue au cours des cycles en termes de stabilité. L'évolution du potentiel en fonction du temps lors de cyclage galvanostatique est en outre bien linéaire.

Ces avantages sont obtenus avec un mélange dans lequel l'époxyde représente 20 à 80% en poids, et le polyuréthanne sensiblement le complément (« sensiblement » signifiant ici au moins 80% du complément).

On préférera, pour obtenir la synergie la plus forte entres les deux avantages, une teneur massique d'époxyde comprise entre 30 et 70%, avec sensiblement le complément en polyuréthanne, plage dans laquelle les résultats sont particulièrement avantageux (même signification préférentielle pour le terme « sensiblement »).

Dans un septième exemple, les électrodes ont été réalisées en utilisant un collecteur en aluminium qui a été tout d'abord décapé mécaniquement par abrasion à l'aide de papiers au carbure de silicium (SiC) de grade compris entre 100 et 800, puis décapé chimiquement tout d'abord par immersion dans une solution de potasse de concentration 5 M, suivie d'un rinçage à l'eau permutée, puis par immersion dans une solution 25 % en volume d'acide nitrique (HNO₃) et 18 g/l de fluorure de potassium (KF), suivie d'un rinçage à l'eau permutée.

Après séchage, le support ainsi traité est peint à l'aide d'une peinture à base de polyuréthanne (HIM DEP 1214 par exemple) chargée à 50% (en masse) en poudre d'aluminium. Le support ainsi préparé est alors introduit dans une étuve à 50°C, et laissé durant sept jours.

Comme dans l'exemple précédent, après ce traitement thermique, la pâte de matière active a été laminée sur le collecteur afin de préparer de nouvelles électrodes de supercondensateur.

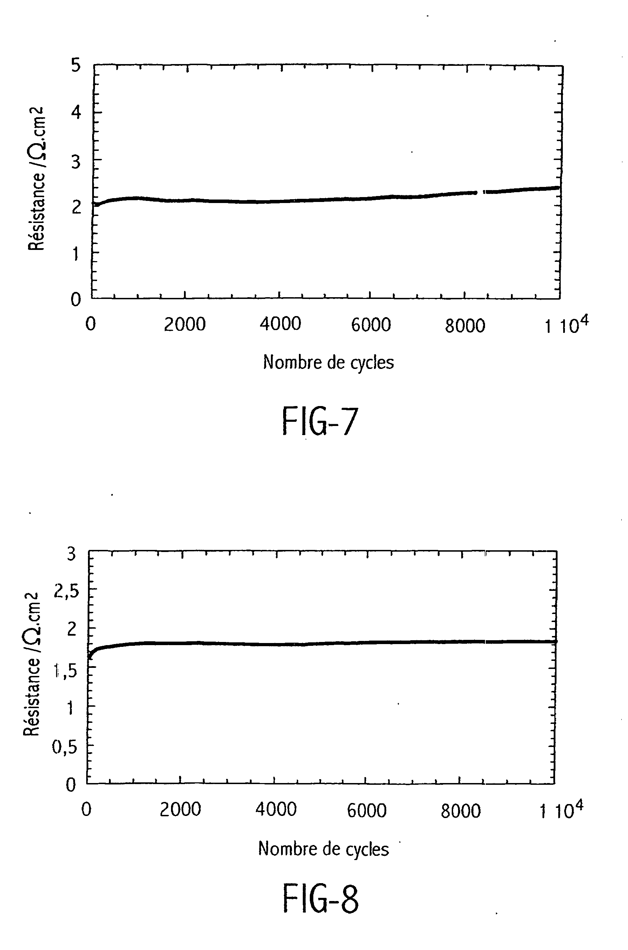

A la figure 7, est représentée l'évolution de la résistance surfacique de la cellule (en ohm.centimètre carré) en fonction du nombre de cycles. La résistance surfacique de la cellule tend vers une valeur d'environ 2,5 ohm.cm2. Cette valeur, obtenue de façon reproductible, montre toujours une nette amélioration par rapport à l'exemple 2, et permet la réalisation de systèmes de puissance.

Dans un huitième exemple, les électrodes ont été réalisées en utilisant un collecteur en aluminium tout d'abord décapé mécaniquement par abrasion à l'aide de papiers au carbure de silicium (SiC) de grade compris entre 100 et 800, suivie d'un rinçage à l'eau permutée (sans décapage chimique).

Après séchage à l'air, le support ainsi traité est peint à l'aide d'une peinture à base de polyuréthanne (HIM DEP 1214 par exemple), chargée à 50% de noir d'acétylène (ACB). Le support ainsi préparé est alors introduit dans une étuve à 40°C, et laissé durant sept jours.

Comme dans les exemples précédents, après ce traitement thermique, la pâte de matière active a été laminée sur le collecteur afin de préparer de nouvelles électrodes de supercondensateur.

A la figure 8 est représentée l'évolution de la résistance surfacique de la cellule (en ohm.centimètre carré) en fonction du nombre de cycles. Nous pouvons remarquer que dans ce cas, la résistance surfacique de la cellule se stabilise à une valeur de moins de 2 ohm.cm².

Ces valeurs, obtenues de façon reproductible, permettent de réaliser des composants de forte puissance spécifique.

Dans un neuvième exemple, nous avons réalisé des électrodes en utilisant un collecteur en aluminium que nous avons tout d'abord décapé mécaniquement par abrasion à l'aide de papiers au carbure de silicium (SiC) de grade compris entre 100 et 800, puis décapé chimiquement par immersion dans une solution de potasse de concentration 5 M, suivie d'un rinçage à l'eau permutée.

Après séchage à l'air, le support ainsi traité est peint à l'aide d'une peinture à base de polyuréthanne (HIM DEP 1214 par exemple), chargée à 50% de noir d'acétylène (ACB).

Le support ainsi préparé est alors introduit dans une étuve à 40°C, et laissé durant sept jours.

Après ce traitement thermique, la pâte de matière active est laminée sur le collecteur afin de préparer des électrodes de supercondensateur.

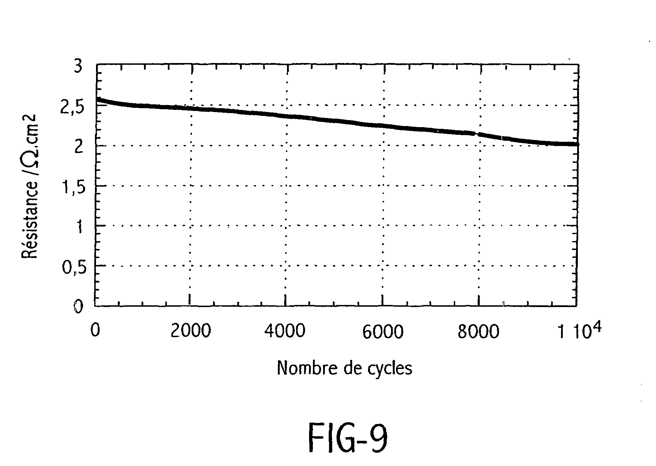

A la figure 9 est représentée l'évolution de la résistance surfacique de la cellule (en ohm.centimètre carré) en fonction du nombre de cycles. Dans ce cas, la résistance surfacique de la cellule tend vers une valeur de 2 ohm.cm².

Comme précédemment, ces valeurs obtenues de façon reproductible permettent de réaliser des composants de forte puissance spécifique.

On préférera donc un traitement thermique à une température supérieure à 40°C.

La présente invention rend les collecteurs, notamment les collecteurs en aluminium, utilisables dans des supercondensateurs fonctionnant en milieu organique. Ce traitement permet de réaliser des collecteurs, fiables et efficaces pour des électrodes de supercondensateur, comportant des matières actives carbonées ou des polymères conducteurs électroniques.

Enfin, ces électrodes pourront être aisément associées en faisceaux d'électrodes afin de constituer des supercondensateurs aux performances améliorées.

La présente invention sera particulièrement intéressante dans le cas des supercondensateurs à double couche électrochimique.

L'invention est aussi d'un grand avantage dans la réalisation des cathodes pour les accumulateurs au lithium (lithium-ion ou lithium-polymère par exemple).

## Revendications

1. Procédé de réalisation d'une électrode du type comprenant notamment un collecteur de courant et une matière électrochimiquement active associée au collecteur, procédé comprenant l'étape consistant à disposer une couche de peinture incluant des particules conductrices entre le collecteur et la matière électrochimiquement active, le procédé comportant, après une étape d'application de la peinture, l'étape consistant à réaliser un traitement thermique de la peinture à une température supérieure à l'ambiante, procédé **caractérisé en ce que** la peinture comprend un epoxyde et un polyuréthanne, la proportion d'époxyde étant comprise entre 20 et 80% en poids, le reste étant composé essentiellement de polyuréthanne.

2. Procédé selon la revendication 1, **caractérisé en ce que** la teneur en epoxyde est comprise entre 30 et 70% en poids, le reste étant composé essentiellement de polyuréthanne.

3. Procédé selon la revendication 1 ou la revendication 2, **caractérisé en ce que** l'étape de traitement thermique est réalisée à une température comprise entre 40°C et 200°C.

4. Procédé selon l'une quelconque des revendications précédentes, **caractérisé en ce que** la peinture est une peinture à base d'époxyde.

5. Procédé selon l'une quelconque des revendications 1 à 3, **caractérisé en ce que** la peinture est une peinture à base de polyuréthanne.

6. Procédé selon l'une quelconque des revendications précédentes, **caractérisé en ce que** le collecteur est en aluminium.

7. Procédé de réalisation d'un générateur électrique comprenant un électrolyte et au moins deux électrodes, au moins une électrode incluant un collecteur de courant et une partie en matière électrochimiquement active distincte associée au collecteur, **caractérisé en ce qu'**il inclut le procédé de réalisation d'électrode selon l'une quelconque des revendications 1 à 6.

8. Procédé de réalisation d'un générateur électrique selon la revendication 7, **caractérisé en ce que** le générateur est un supercondensateur.

9. Procédé de réalisation d'un générateur électrique selon la revendication 7, **caractérisé en ce que** le générateur est un accumulateur au lithium.

## Patentansprüche

1. Verfahren zu Herstellung einer Elektrode der Art, die insbesondere einen Stromkollektor und ein mit dem Kollektor assoziiertes elektrochemisch aktives Material umfasst, wobei das Verfahren den Schritt umfasst, der darin besteht, eine Anstrichschicht, die leitende Teilchen einschließt, zwischen dem Kollektor und dem elektrochemisch aktiven Material anzuordnen, das Verfahren nach dem Schritt der Auftragung des Anstrichs den Schritt umfasst, der darin besteht, eine Wärmebehandlung des Anstrichs bei einer Temperatur oberhalb von Umgebung durchzuführen, wobei das Verfahren **dadurch gekennzeichnet ist, dass** der Anstrich ein Epoxid und ein Polyurethan umfasst, wobei der Anteil des Epoxids zwischen 20 und 80 Gew.% einschließlich beträgt, der Rest im Wesentlichen aus Polyurethan zusammengesetzt ist.

2. Verfahren nach Anspruch 1, **dadurch gekennzeichnet, dass** der Gehalt an Epoxid zwischen 30 und 70 Gew.% einschließlich liegt, wobei der Rest im Wesentlichen aus Polyurethan zusammengesetzt ist.

3. Verfahren nach Anspruch 1 oder Anspruch 2, **dadurch gekennzeichnet, dass** der Schritt der Wärmebehandlung bei einer Temperatur zwischen 40 °C und 200 °C einschließlich durchgeführt wird.

4. Verfahren nach irgendeinem der vorangehenden Ansprüche, **dadurch gekennzeichnet, dass** der Anstrich ein Anstrich auf der Basis von Epoxid ist.

5. Verfahren nach irgendeinem der Ansprüche 1 bis 3, **dadurch gekennzeichnet, dass** der Abstrich ein Anstrich auf der Basis von Polyurethan ist.

6. Verfahren nach irgendeinem der vorangehenden Ansprüche, **dadurch gekennzeichnet, dass** der Kollektor aus Aluminium ist.

7. Verfahren zur Herstellung eines elektrischen Generators, der einen Elektrolyten und mindestens zwei Elektroden umfasst, wobei mindestens eine Elektrode einen Stromkollektor und einen gesonderten Teil aus elektrochemisch aktivem Material einschließt, das mit dem Kollektor assoziiert ist, **dadurch gekennzeichnet, dass** es das Verfahren zur Elektrodenherstellung nach irgendeinem der Ansprüche 1 bis 6 einschließt.

8. Verfahren zur Herstellung eines elektrischen Generators nach Anspruch 7, **dadurch gekennzeichnet, dass** der Generator ein Superkondensator ist.

9. Verfahren zur Herstellung eines elektrischen Generators nach Anspruch 7, **dadurch gekennzeichnet, dass** der Generator ein Lithiurnakkumulator ist.

## Claims

1. Process for producing an electrode of the type comprising in particular a current collector and an electrochemically active material in combination with the collector, which process comprises the stage consisting in depositing a coat of paint, including conductive particles, between the collector and the electrochemically active material, the process comprising, after a stage of application of the paint, the stage consisting in carrying out a heat treatment of the paint at a temperature above ambient temperature, which process is **characterized in that** the paint comprises an epoxide and a polyurethane, the proportion of epoxide being between 20 and 80% by weight, the remainder being composed essentially of polyurethane.

2. Process according to Claim 1, **characterized in that** the content of epoxide is between 30 and 70% by weight, the remainder being composed essentially of polyurethane.

3. Process according to Claim 1 or Claim 2, **characterized in that** the heat treatment stage is carried out at a temperature of between 40°C and 200°C.

4. Process according to any one of the preceding claims, **characterized in that** the paint is an epoxide-based paint.

5. Process according to any one of Claims 1 to 3, **characterized in that** the paint is a polyurethane-based paint.

6. Process according to any one of the preceding claims, **characterized in that** the collector is made of aluminium.

7. Process for producing an electric generator comprising an electrolyte and at least two electrodes, at least one electrode including a current collector and a separate part made of electrochemically active material in combination with the collector, **characterized in that** it includes the process for producing an electrode according to any one of Claims 1 to 6.

8. Process for producing an electric generator according to Claim 7, **characterized in that** the generator is a supercapacitor.

9. Process for producing an electric generator according to Claim 7, **characterized in that** the generator is a lithium storage battery.
